# EUROPÄISCHE PATENTSCHRIFT

(11) **EP 3 157 201 B1**
(45) Veröffentlichungstag und Bekanntmachung des Hinweises auf die Patenterteilung: **22.08.2018**
(21) Anmeldenummer: 16194135.6
(22) Anmeldetag: 17.10.2016
(51) Int. Cl.: H04L 12/417

(54) **ZEITGESTEUERTES CUT-THROUGH VERFAHREN ZUM DATENTRANSPORT IN VERTEILTEN ECHTZEITSYSTEMEN**
TIMED CUT-THROUGH METHOD FOR DATA TRANSPORT IN DISTRIBUTED REAL TIME SYSTEMS
PROCÉDÉ DE TRAVERSE TRANSPARENTE TEMPORISÉE DESTINÉ AU TRANSPORT DE DONNÉES DANS DES SYSTÈMES EN TEMPS RÉEL RÉPARTIS

(30) Priorität: 16.10.2015 AT 508832015
(43) Veröffentlichungstag der Anmeldung: 19.04.2017
(73) Patentinhaber: FTS Computertechnik GmbH, 1040 Wien (AT)
(72) Erfinder: POLEDNA, Stefan, 3400 Klosterneuburg (AT)
(74) Vertreter: Patentanwaltskanzlei Matschnig & Forsthuber OG

(56) Entgegenhaltungen:
- EP-A1- 1 686 744
- EP-A1- 2 221 209
- US-A1- 2010 254 392
- US-A1- 2011 026 411

## Beschreibung

Die Erfindung betrifft ein Verfahren zum periodischen Transport von Echtzeitdaten in einem verteilten Computersystem, welches Computersystem Knotenrechner, insbesondere eine Vielzahl von Knotenrechnern, und Verteilereinheiten, insbesondere eine Vielzahl von Verteilereinheiten, umfasst, wobei die Knotenrechner und die Verteilereinheiten Zugriff auf eine globale Zeit haben, und wobei Echtzeitdaten mittels zeitgesteuerter Echtzeitnachrichten transportiert werden, wobei zeitgesteuerte Echtzeitnachrichten in den Verteilereinheiten in periodischen Zeitschlitzen transportiert werden.

Weiters betrifft die Erfindung ein Computersystem, insbesondere ein verteiltes Echtzeitcomputersystem, zum periodischen Transport von Echtzeitdaten, wobei das Computersystem Knotenrechner, insbesondere eine Vielzahl von Knotenrechnern, und Verteilereinheiten, insbesondere eine Vielzahl von Verteilereinheiten, umfasst, wobei die Knotenrechner und die Verteilereinheiten Zugriff auf eine globale Zeit haben, und wobei Echtzeitdaten mittels zeitgesteuerter Echtzeitnachrichten transportiert werden, wobei zeitgesteuerte Echtzeitnachrichten in den Verteilereinheiten in periodischen Zeitschlitzen transportiert werden.

Ein eingangs genanntes Verfahren ist aus der EP 1 686 744 A1 bekannt.

In vielen Echtzeitsystemen, vor allem im Bereich der Regelungstechnik werden periodische Prozesse realisiert [3]. In einem verteilten Echtzeitcomputersystem bezeichnet man einen sich zeitlich wiederholenden periodischen Prozessabschnitt als einen *Frame.*

In einem verteilten Echtzeitcomputersystem beginnt ein Frame mit der synchronisierten Beobachtung eines technischen Prozesses durch beispielsweise räumlich verteilte Sensoren, um den Zustand dieses technischen Prozesses zu einem vorgegebenen Zeitpunkt zu erfassen.

Jedem Sensor ist vorzugsweise ein Knotenrechner zugeordnet, wobei Sensor und Knotenrechner als getrennte Baueinheiten ausgebildet und miteinander verbunden sein können, oder Sensor und Knotenrechner sind als eine Baueinheit ausgebildet ("intelligenter Sensor").

Die Beobachtung eines technischen Prozesses kann nur dann synchron stattfinden, wenn alle Knotenrechner, die in der Regel dezentral angeordnet sind, Zugriff auf eine globale Zeit haben. Beispielsweise kann die im zeitgesteuerten TT-Ethernet Protokoll [2] enthaltene interne Uhrensynchronisation zum Aufbau einer globalen Zeit in allen Komponenten eines verteilten Echtzeitsystems, insbesondere eines verteilten Echtzeitcomputersystems, genutzt werden. Da es möglich ist, die interne Ethernet Zeit mit einem externen Zeitstandard, z.B. GPS, zu synchronisieren, kann die Ethernet Zeit die Synchronisation der Sensoren auch übernehmen, wenn eine externe Synchronisation erforderlich ist.

Die bei den Sensoren angeordneten bzw. den Sensoren zugeordneten Knotenrechner oder die intelligenten Sensoren führen eine erste Vorverarbeitung der Sensordaten durch und senden diese vorverarbeiteten Sensordaten, vorzugsweise in einem *periodisch wiederkehren Zeitschlitz,* in der Form von Echtzeitnachrichten über ein Echtzeitkommunikationssystem an eine Steuerungszentrale. Die Auswertung der eintreffenden Sensordaten in der Steuerungszentrale ermöglicht es, den aktuellen Zustand des beobachteten technischen Prozesses zu erfassen und (neue) Sollwerte für vorhandene Aktuatoren vorzugeben.

Bei einem schnellen technischen Prozess müssen möglichst kurzdauernde Frames realisiert werden. Die Dauer eines Frames wird von der Summe der Transportdauern der Echtzeitnachrichten und der Verarbeitungsdauern der Echtzeitdaten bestimmt.

Unter einer Echtzeitnachricht wird eine Nachricht verstanden, die Echtzeitdaten enthält und die innerhalb eines vorgegebenen Zeitintervalls (Echtzeitinterintervalls) bei einem Empfänger eintreffen soll.

In einem Netzwerk wird zwischen zwei Verfahren des Nachrichtentransports unterschieden, dem *store-and-forward Verfahren* und dem *cut-through Verfahren [1]*. Beim *store and forward* Verfahren wird eine eintreffende Nachricht in einer Verteilereinheit als Ganzes zwischengespeichert, bevor sie von der Verteilereinheit in Richtung ihres Ziels weitergeleitet wird.

Entsprechend dem Stand der Technik wird beim *cut-through* Verfahren nach Auswertung des ersten Teils der Nachricht in der Verteilereinheit, dem *Nachrichtenheader,* in dem die Attribute der Nachricht wie Nachrichtentyp, Zieladresse und Senderadresse enthalten sind, mit der Weiterleitung der Nachricht in Richtung ihres Ziel bereits begonnen, ehe die gesamte Nachricht in der Verteilereinheit eingetroffen ist. Das *cut-through* Verfahren weist daher ein kürzeres Durchlaufintervall der Nachricht in einer Verteilereinheit auf als das *store-and-foward* Verfahren.

Es ist eine Aufgabe der Erfindung, ein Verfahren und ein Computersystem anzugeben, wie die Transportdauern von Echtzeitnachrichten, die über ein zeitgesteuertes Netzwerk, umfassend insbesondere eine Vielzahl von verbundenen Verteilereinheiten, transportiert werden müssen, kurz gehalten werden kann.

Diese Aufgabe wird mit einem eingangs erwähnten Verfahren und einem eingangs erwähnten Computersystem dadurch gelöst, dass erfindungsgemäß Attribute von zeitgesteuerten Echtzeitnachrichten *a priori* jenen periodischen Zeitschlitzen einer Verteilereinheit, in welchen periodischen Zeitschlitzen diese zeitgesteuerten Echtzeitnachrichten durch die Verteilereinheit zu transportieren sind, zugewiesen und vorzugsweise in der Verteilereinheit gespeichert werden, und wobei die einem periodischen Zeitschlitz zugewiesenen Attribute jenen Ausgangsport oder jene Ausgangsports der Verteilereinheit angeben, an welchen bzw. an welche eine in dem periodischen Zeitschlitz in der Verteilereinheit einlangende zeitgesteuerte Echtzeitnacht in der Verteilereinheit weiterzuleiten ist, und wobei eine in einem periodischen Zeitschlitz in der Verteilereinheit eintreffende Nachricht nach dem Beginn des Eintreffens der Nachricht in der Verteilereinheit, insbesondere unmittelbar nach dem Beginn des Eintreffens, und zwar unmittelbar nach dem Eintreffen des Anfangs eines Headers der eintreffenden Nachricht, an den oder die in den dem periodischen Zeitschlitz zugewiesenen Attributen spezifizierten Ausgangsport bzw. Ausgangsports der Verteilereinheit weitergeleitet wird.

Weiters kann die Aufgabe mit einer Verteilereinheit gelöst werden, welche dazu eingerichtet ist, die oben beschriebenen Maßnahmen umzusetzen.

Erfindungsgemäß wird ein modifiziertes, *zeitgesteuerter cut-through Verfahrens* eingeführt. Entsprechend diesem neuen Verfahren werden Attribute, wie z.B. die Zieladresse, einer zeitgesteuerten Echtzeitnachricht *a priori* dem periodischen Zeitschlitz zugewiesen, in welchem Zeitschlitz die periodische zeitgesteuerte Echtzeitnachricht durch eine Verteilereinheit transportiert werden wird. Nach Eintreffen des Beginns einer Nachricht in einem Zeitschlitz ist es daher nicht, wie im bekannten *cut-through* Verfahren, erforderlich zu warten, bis auf die im Header der einlangenden Nachricht gespeicherten Attribute zugegriffen werden kann, sondern es kann auf Basis der *a priori* gespeicherten Attribute sofort mit der Weiterleitung der in der Verteilereinheit einlangenden Nachricht in Richtung ihres Ziels (z.B. zu welchem Ausgangsport oder welchen Ausgangsports der Verteilereinheit) begonnen werden, da auf Grund der zeitgesteuerten Übertragung der Echtzeitnachricht die Verteilereinheit davon ausgehen kann, dass die in einem periodischen Zeitschlitz eintreffende Nachricht jene Echtzeitnachricht ist, welche die für diesen periodischen Zeitschlitz aufweisenden Attribute aufweist.

Vorzugsweise ist unter dem Begriff "unmittelbar nach dem Eintreffen des Anfangs eines Headers der eintreffenden Nachricht" zu verstehen, dass auf jeden Fall noch bevor der Header vollständig eingetroffen ist, die eintreffende Nachricht weitergeleitet wird, zumindest mit der Weiterleitung bereits begonnen wird.

Insbesondere ist bevorzugt darunter zu verstehen, dass im Rahmen der technischen Möglichkeiten möglichst rasch nach dem Eintreffen des Beginns des Headers die Weiterleitung erfolgt oder mit der Weiterleitung begonnen wird.

Das Durchlaufintervall von Nachrichten in einer Verteilereinheit bzw. durch eine Verteilereinheit wird bei diesem neuen Verfahren weitestgehend eliminiert. Damit wird die Transportdauer der Nachrichten durch das Netzwerk auf die physikalisch vorgegebenen Signallaufzeiten reduziert.

Vorteilhafte Ausgestaltungen des erfindungsgemäßen Verfahrens bzw. Computersystems, welche jeweils für sich allein oder in beliebiger Kombination realisiert sein können, sind im Folgenden aufgezählt:
- es wird, - vorzugsweise von jener Verteilereinheit, durch welche eine Nachricht durchläuft, - überprüft, ob die in einem Header einer durch die Verteilereinheit durchlaufenden Nachricht enthaltenen Attribute mit den jenem periodischen Zeitschlitz, in welchem die durchlaufende Nachricht in der Verteilereinheit eingelangt ist, zugewiesenen, vorzugsweise in der Verteilereinheit gespeicherten, Attributen übereinstimmen;
- in dem Fall, dass die Attribute der durchlaufenden Nachricht nicht mit den dem periodischen Zeitschlitz zugewiesenen Attributen übereinstimmen, wird der laufende Nachrichtentransport der Nachricht, vorzugsweise von der Verteilereinheit, abgebrochen;
- Nachrichten, welche nicht in einem periodischen Zeitschlitz für zeitgesteuerte Echtzeitnachrichten in der Verteilereinheit einlangen, werden - vorzugsweise von der Verteilereinheit - überprüft, und in dem Fall, dass zumindest ein Attribut, vorzugsweise alle Attribute, dieser Nachricht angibt/angeben, dass es sich um eine zeitgesteuerte Echtzeitnachricht handelt, diese Nachricht bis zu dem periodischen Zeitschlitz zum Weitersenden der zeitgesteuerten Echtzeitnachricht zwischenspeichert wird;
- die zumindest eine Verteileinheit, vorzugsweise alle Verteilereinheiten, belegt bzw. belegen Zeitschlitze, die für eine zeitgesteuerte Echtzeitnachricht vorgesehen sind, durch keine andere Nachricht;
- die zumindest eine Verteileinheit, vorzugsweise alle Verteilereinheiten, wickelt bzw. wickeln den Nachrichtentransport für zeitgesteuerte Echtzeitnachrichten entsprechend dem TTEthernet Protokoll ab.

Im Zeitintervall zwischen dem *Beginn des Sendens* einer Nachricht von einem Knotenrechner oder einer Verteilereinheit und dem *Ende des Sendens* dieser Nachricht wird die Nachricht als *auslaufende Nachricht* bezogen auf diesen Knotenrechner oder diese Verteilereinheit bezeichnet.

Im Zeitintervall zwischen dem *Beginn des Empfangs* einer Nachricht bei einem Knotenrechner oder einer Verteilereinheit und dem *Ende des Empfangs* dieser Nachricht wird die Nachricht als *einlaufende*/*einlangende Nachricht* bezogen auf diesen Knotenrechner oder diese Verteilereinheit bezeichnet.

Die vorliegende Erfindung wird an Hand der folgenden Zeichnung an einem Beispiel näher erklärt. In dieser zeigt
Fig. 1 die Struktur eines einfachen Echtzeitcomputersystems, und
Fig. 2 das Format einer typischen Netzwerknachricht.

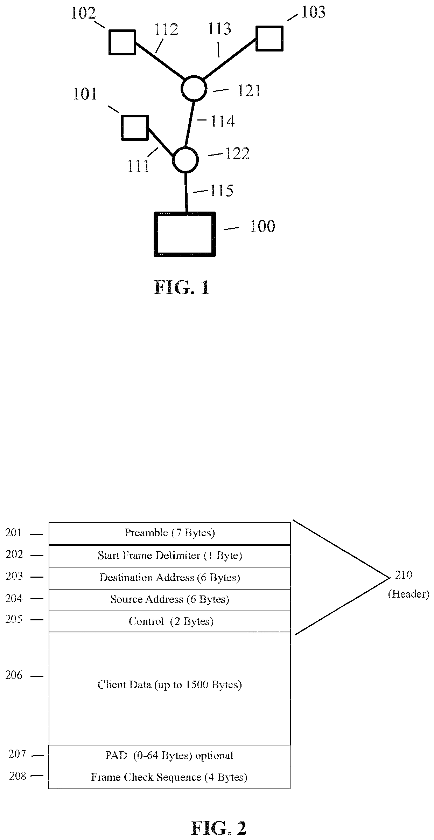

**Figur 1** zeigt ein einfaches Computersystem bzw. Computernetzwerk, insbesondere ein verteiltes Echtzeitcomputersystem, mit vier Knotenrechnern **100, 101, 102, 103** und zwei Verteilereinheiten **121, 122.** Eine Datenleitung **115** verbindet den Knotenrechner **100** mit der Verteilereinheit **122,** eine Datenleitung **111** verbindet den Knotenrechner **101** mit der Verteilereinheit **122,** eine Datenleitung **112** verbindet den Knotenrechner **102** mit der Verteilereinheit **121,** eine Datenleitung **113** verbindet den Knotenrechner **103** mit der Verteilereinheit **121,** und eine Datenleitung **114** verbindet die Verteilereinheit **121** mit der Verteilereinheit **122.**

**Figur 2** zeigt das Format einer typischen Netzwerknachricht, wie sie z.B. in *TT-Ethernet* [2] auftritt. Nach der *Preamble* **201** folgt der *Start Delimiter* **202,** die Ziel Adresse **203,** die Start Adresse **204** und ein Kontrollfeld **205,** das die Länge der Nachricht angeben kann. Die Felder **201, 202, 203 204, 205** bezeichnet man als Header **210** der Nachricht. Anschließend an den Header liegt die Payload **206,** das ist der Bereich der Nutzdaten. Wenn nur wenige Bytes an Nutzdaten vorhanden sind, so ist die Nachricht mit dem Feld **207** auf eine minimale Länge zu strecken. Am Ende der Nachricht liegt die *Frame Check Sequence* **208. In** **Figur 2** enthalten die Felder **103, 104, 105** die *Attribute* der Nachricht. Diese Attribute sind vorzugsweise im Header **110** der Nachricht enthalten.

Entsprechend dem Stand der Technik [1] müssen im bekannten *cut-through Verfahren* nach Eintreffen des Nachrichtenanfangs in einer Verteilereinheit z.B. die ersten 20 Bytes einer Nachricht abgewartet werden, ehe entschieden werden kann, an welchen Ausgangsport der Verteilereinheit die Nachricht weitergeleitet werden muss.

Bei der vorliegenden Erfindung werden nun Echtzeitdaten mittels zeitgesteuerter Echtzeitnachrichten in dem Computersystem übertragen. Betrachtet man eine bestimmte Verteilereinheit, so ist vorgesehen, dass eine bestimmte zeitgesteuerte Echtzeitnachricht in einem bestimmten Zeitschlitz von dieser Verteilereinheit transportiert wird. Erfindungsgemäß werden daher die Attribute einer solchen Echtzeitnachricht *a priori* in der Verteilereinheit gespeichert und dem periodischen Zeitschlitz zugewiesen, zu dem diese Echtzeitnachricht in dieser Verteilereinheit erwartet wird.

Sofort nach Eintreffen des Beginns einer Nachricht in einer Verteilereinheit wird daher diese Nachricht an den Ausgangsport oder die Ausgangsports der Verteilereinheit, ohne Zwischenspeicherung, weitergeleitet, und ohne dass abgewartet werden muss, bis die Attribute aus der einlangenden Echtzeitnachricht ausgelesen werden können.

Um zu verhindern, dass eine andere Nachricht als die erwartete Echtzeitnachricht auf der Basis der gespeicherten Attribute weitergeleitet wird, ist vorzugsweise vorgesehen, dass die Verteilereinheit während des Sendens überprüft, ob die im Header der die Verteilereinheit durchlaufenden Nachricht enthaltenen Attribute mit den *a priori* in der Verteilereinheit gespeicherten Attributen der erwarteten zeitgesteuerten Echtzeitnachricht übereinstimmen und, falls dies nicht der Fall ist, bricht die Verteilereinheit den laufenden Nachrichtentransport der durchlaufenden Nachricht ab. Da somit der Empfänger einer abgebrochen Nachricht keine korrekte *Frame Check Sequence* **108** empfängt, wird er diese Nachricht verwerfen.

In einem Computersystem wie in **Figur 1** gezeigt kann der Fall auftreten, dass beispielsweise der Knotenrechner **102** eine zeitgesteuerte Echtzeitnachricht vor dem Zeitschlitz, der *a priori* für diese zeitgesteuerte Echtzeitnachricht in der Verteilereinheit **121** vorgesehen ist, an die Verteilereinheit **121** sendet. In diesem Fall wird die Verteilereinheit **121** die zeitgesteuerte Echtzeitnachricht solange zwischenspeichern, bis der für diese zeitgesteuerte Echtzeitnachricht vorgesehene Zeitschlitz beginnt.

In **Figur 1** kann auch der Fall auftreten, dass beispielsweise der Knotenrechner **102** eine zeitgesteuerte Echtzeitnachricht und gleichzeitig der Knotenrechner **103** eine *store-and-forward* Nachricht über die Verteilereinheiten **121** und **122** an den Knotenrechner **100** zu senden beginnen. Um zu verhindern, dass die Verteileinheit **121** oder die Verteileinheit **122** den jeweils *a priori* bekannten Zeitschlitz, der für eine bestimmte zeitgesteuerte Echtzeitnachricht vorgesehen ist, durch eine andere Nachricht belegt, wird vorzugsweise festgelegt, dass eine Verteilereinheit einen Zeitschlitz, der für eine bestimmte zeitgesteuerte Echtzeitnachricht vorgesehen ist, durch keine andere Nachricht belegen darf.

In verteilten Echtzeitsystemen, insbesondere verteilten Echtzeitcomputersystemen, ergibt sich durch die vorliegende Erfindung eine signifikante Reduktion der Datenübertragungszeit. Die damit verbundene wesentliche Verbesserung der Regelungstechnik ist von großer wirtschaftlicher Bedeutung.

### Zitierte Literatur

[1] Wikipedia, *Switch.* URL: https://de.wikipedia.org/wiki/Switch_(Netzwerktechnik)
[2] SAE Standard AS6802 von TT Ethernet. URL: http://standards.sae.org/as6802
[3] Kopetz, H. Pulsed Data Streams. In: From Model Driven Design to Resource Management for Distributed Embedded Systems. Ed.: B. Kleinjohann et al. IFIP Series Vol. 225. Pp. 105-114. Springer Verlag. 2006.

## Patentansprüche

1. Verfahren zum periodischen Transport von Echtzeitdaten in einem verteilten Computersystem, welches Computersystem Knotenrechner (**100, 101, 102, 103**), insbesondere eine Vielzahl von Knotenrechnern (**100, 101, 102, 103**), und Verteilereinheiten (**121, 122**), insbesondere eine Vielzahl von Verteilereinheiten (**121, 122**), umfasst, wobei die Knotenrechner (**100, 101, 102, 103**) und die Verteilereinheiten (**121, 122**) Zugriff auf eine globale Zeit haben, und wobei Echtzeitdaten mittels zeitgesteuerter Echtzeitnachrichten transportiert werden, wobei zeitgesteuerte Echtzeitnachrichten in den Verteilereinheiten in periodischen Zeitschlitzen transportiert werden,
**dadurch gekennzeichnet, dass**
Attribute von zeitgesteuerten Echtzeitnachrichten *a priori* jenen periodischen Zeitschlitzen einer Verteilereinheit (**121, 122**), in welchen periodischen Zeitschlitzen diese zeitgesteuerten Echtzeitnachrichten durch die Verteilereinheit (**121, 122**) zu transportieren sind, zugewiesen und vorzugsweise in der Verteilereinheit (**121, 122**) gespeichert werden, und wobei die einem periodischen Zeitschlitz zugewiesenen Attribute jenen Ausgangsport oder jene Ausgangsports der Verteilereinheit (**121, 122**) angeben, an welchen bzw. an welche eine in dem periodischen Zeitschlitz in der Verteilereinheit (**121, 122**) einlangende zeitgesteuerte Echtzeitnacht in der Verteilereinheit (**121, 122**) weiterzuleiten ist, und
wobei eine in einem periodischen Zeitschlitz in der Verteilereinheit (**121, 122**) eintreffende Nachricht nach dem Beginn des Eintreffens der Nachricht in der Verteilereinheit (**121, 122**), insbesondere unmittelbar nach dem Beginn des Eintreffens, und zwar unmittelbar nach dem Eintreffen des Anfangs eines Headers der eintreffenden Nachricht, an den oder die in den dem periodischen Zeitschlitz zugewiesenen Attributen spezifizierten Ausgangsport bzw. Ausgangsports der Verteilereinheit (**121**, **122**) weitergeleitet wird.

2. Verfahren nach Anspruch 1, **dadurch gekennzeichnet, dass** - vorzugsweise von jener Verteilereinheit (**121, 122**), durch welche eine Nachricht durchläuft, - überprüft wird, ob die in einem Header (**110**) einer durch die Verteilereinheit (**121, 122**) durchlaufenden Nachricht enthaltenen Attribute mit den jenem periodischen Zeitschlitz, in welchem die durchlaufende Nachricht in der Verteilereinheit (**121, 122**) eingelangt ist, zugewiesenen, vorzugsweise in der Verteilereinheit (**121, 122**) gespeicherten, Attributen übereinstimmen.

3. Verfahren nach Anspruch 2, **dadurch gekennzeichnet, dass** in dem Fall, dass die Attribute der durchlaufenden Nachricht nicht mit den dem periodischen Zeitschlitz zugewiesenen Attributen übereinstimmen, der laufende Nachrichtentransport der Nachricht, vorzugsweise von der Verteilereinheit (**121, 122**), abgebrochen wird.

4. Verfahren nach einem der Ansprüche 1 bis 3, **dadurch gekennzeichnet, dass** Nachrichten, welche nicht in einem periodischen Zeitschlitz für zeitgesteuerte Echtzeitnachrichten in der Verteilereinheit (**121, 122**) einlangen,- vorzugsweise von der Verteilereinheit (**121, 122**) - überprüft werden, und in dem Fall, dass zumindest ein Attribut, vorzugsweise alle Attribute, dieser Nachricht angibt/angeben, dass es sich um eine zeitgesteuerte Echtzeitnachricht handelt, diese Nachricht bis zu dem periodischen Zeitschlitz zum Weitersenden der zeitgesteuerten Echtzeitnachricht zwischenspeichert wird.

5. Verfahren nach einem der Ansprüche 1 bis 4, **dadurch gekennzeichnet, dass** die zumindest eine Verteileinheit (**121, 122**) Zeitschlitze, die für eine zeitgesteuerte Echtzeitnachricht vorgesehen sind, durch keine andere Nachricht belegt.

6. Verfahren nach einem der Ansprüche 1 bis 5, **dadurch gekennzeichnet, dass** die zumindest eine Verteilereinheit (**121, 122**) den Nachrichtentransport für zeitgesteuerte Echtzeitnachrichten entsprechend dem TTEthernet Protokoll abwickelt.

7. Computersystem, insbesondere verteiltes Echtzeitcomputersystem, zum periodischen Transport von Echtzeitdaten, wobei das Computersystem Knotenrechner (**100, 101, 102, 103**), insbesondere eine Vielzahl von Knotenrechnern (**100, 101, 102, 103**), und Verteilereinheiten (**121, 122**), insbesondere eine Vielzahl von Verteilereinheiten (**121, 122**), umfasst, wobei die Knotenrechner (**100,101,102,103**) und die Verteilereinheiten (**121, 122**) Zugriff auf eine globale Zeit haben, und wobei Echtzeitdaten mittels zeitgesteuerter Echtzeitnachrichten transportiert werden, wobei zeitgesteuerte Echtzeitnachrichten in den Verteilereinheiten in periodischen Zeitschlitzen transportiert werden,
**dadurch gekennzeichnet, dass**
Attribute von zeitgesteuerten Echtzeitnachrichten *a priori* jenen periodischen Zeitschlitzen einer Verteilereinheit (**121, 122**), in welchen periodischen Zeitschlitzen diese zeitgesteuerten Echtzeitnachrichten durch die Verteilereinheit (**121, 122**) zu transportieren sind, zugewiesen und vorzugsweise in der Verteilereinheit (**121, 122**) gespeichert werden, und wobei die einem periodischen Zeitschlitz zugewiesenen Attribute jenen Ausgangsport oder jene Ausgangsports der Verteilereinheit (**121, 122**) angeben, an welchen bzw. an welche eine in dem periodischen Zeitschlitz in der Verteilereinheit (**121, 122**) einlangende zeitgesteuerte Echtzeitnacht in der Verteilereinheit (**121, 122**) weiterzuleiten ist, und
wobei eine in einem periodischen Zeitschlitz in der Verteilereinheit (**121, 122**) eintreffende Nachricht nach dem Beginn des Eintreffens der Nachricht in der Verteilereinheit (**121, 122**), insbesondere unmittelbar nach dem Beginn des Eintreffens, und zwar unmittelbar nach dem Eintreffen des Anfangs eines Headers der eintreffenden Nachricht, an den oder die in den dem periodischen Zeitschlitz zugewiesenen Attributen spezifizierten Ausgangsport bzw. Ausgangsports der Verteilereinheit (**121, 122**) weitergeleitet wird.

8. Computersystem nach Anspruch 7, **dadurch gekennzeichnet, dass** - vorzugsweise von jener Verteilereinheit (**121, 122**), durch welche eine Nachricht durchläuft, - überprüft wird, ob die in einem Header (**110**) einer durch die Verteilereinheit (**121, 122**) durchlaufenden Nachricht enthaltenen Attribute mit den jenem periodischen Zeitschlitz, in welchem die durchlaufende Nachricht in der Verteilereinheit (**121, 122**) eingelangt ist, zugewiesenen, vorzugsweise in der Verteilereinheit (**121, 122**) gespeicherten, Attributen übereinstimmen.

9. Computersystem nach Anspruch 8, **dadurch gekennzeichnet, dass** in dem Fall, dass die Attribute der durchlaufenden Nachricht nicht mit den dem periodischen Zeitschlitz zugewiesenen Attributen übereinstimmen, der laufende Nachrichtentransport der Nachricht, vorzugsweise von der Verteilereinheit (**121, 122**), abgebrochen wird.

10. Computersystem nach einem der Ansprüche 7 bis 9, **dadurch gekennzeichnet, dass** Nachrichten, welche nicht in einem periodischen Zeitschlitz für zeitgesteuerte Echtzeitnachrichten in einer Verteilereinheit (**121, 122**) einlangen, - vorzugsweise von der Verteilereinheit (**121, 122**) - überprüft werden, und in dem Fall, dass zumindest ein Attribut, vorzugsweise alle Attribute, dieser Nachricht angibt/angeben, dass es sich um eine zeitgesteuerte Echtzeitnachricht handelt, diese Nachricht bis zu dem periodischen Zeitschlitz zum Weitersenden der zeitgesteuerten Echtzeitnachricht zwischenspeichert wird.

11. Computersystem nach einem der Ansprüche 7 bis 10, **dadurch gekennzeichnet, dass** die zumindest eine Verteilereinheit (**121, 122**) Zeitschlitze, die für eine zeitgesteuerte Echtzeitnachricht vorgesehen sind, durch keine andere Nachricht belegt.

12. Computersystem nach einem der Ansprüche 7 bis 11, **dadurch gekennzeichnet, dass** die zumindest eine Verteileinheit (**121, 122**) den Nachrichtentransport für zeitgesteuerte Echtzeitnachrichten entsprechend dem TTEthernet Protokoll abwickelt.

## Claims

1. A method for periodically transporting real-time data in a distributed computer system, said computer system comprising node computers (100, 101, 102, 103), in particular a plurality of node computers (100, 101, 102, 103), and distributor units (121, 122), in particular a plurality of distributor units (121, 122), wherein the node computers (100, 101, 102, 103) and the distributor units (121, 122) have access to a global time, and wherein real-time data is transported by means of time-controlled real-time messages, wherein the time-controlled real-time messages are transported in periodic time slots in the distributor units,
**characterized in that**
attributes of time-controlled real-time messages are assigned *a priori* to those periodic time slots of a distributor unit (121, 122), in which periodic time slots these time-controlled real-time messages are to be transported through the distributor unit (121, 122), and are preferably stored in the distributor unit (121, 122), and wherein the attributes assigned to a periodic time slot indicate the output port or output ports of the distributor unit (121, 122) at which a time-controlled real-time message in the distributor unit (121, 122) arriving in the periodic time slot in the distributor unit (121, 122) is to be forwarded, and,
wherein a message arriving in a periodic time slot in the distributor unit (121, 122) is forwarded, after the beginning of the arrival of the message in the distributor unit (121, 122), in particular immediately after the beginning of the arrival, and specifically immediately after the arrival of the start of a header of the arriving message, to the output port or output ports of the distributor unit (121, 122) specified in the attributes assigned to the periodic time slot.

2. The method according to claim 1, **characterized in that** there is a check, preferably by the distributor unit (121, 122) through which a message is passing, of whether the attributes contained in a header (110) of a message passing through the distributor unit (121, 122) match the attributes, preferably stored in the distributor unit (121, 122), assigned to that periodic time slot in which the message passing through has arrived in the distributor unit (121, 122).

3. The method according to claim 2, **characterized in that** if the attributes of the message passing through do not match the attributes assigned to the periodic time slot, the current message transport of the message is discontinued, preferably by the distributor unit (121, 122).

4. The method according to any of claims 1 through 3, **characterized in that** messages that do not arrive in a periodic time slot for time-controlled real-time messages in the distributor unit (121, 122) are checked, preferably by the distributor unit (121, 122), and, if at least one attribute, preferably all attributes, of this message indicate(s) that it is a time-controlled real-time message, this message is stored for forwarding of the time-controlled real-time message until the periodic time slot.

5. The method according to any of claims 1 through 4, **characterized in that** the at least one distributor unit (121, 122) does not occupy time slots, that are provided for a time-controlled real-time message, by any other message.

6. The method according to any of claims 1 through 5, **characterized in that** the at least one distributor unit (121, 122) handles the message transport for time-controlled real-time messages according to the TTEthernet protocol.

7. A computer system, in particular a distributed real-time computer system, for periodically transporting real-time data, wherein the computer system comprises node computers (100, 101, 102, 103), in particular a plurality of node computers (100, 101, 102, 103), and distributor units (121, 122), in particular a plurality of distributor units (121, 122), wherein the node computers (100, 101, 102, 103) and the distributor units (121, 122) have access to a global time, and wherein real-time data are transported by means of time-controlled real-time messages, wherein time-controlled real-time messages in the distributor units are transported in periodic time slots,
**characterized in that**
attributes of time-controlled real-time messages are assigned *a priori* to those periodic time slots of a distributor unit (121, 122), in which periodic time slots these time-controlled real-time messages are to be transported through the distributor unit (121, 122), and are preferably stored in the distributor unit (121, 122), and wherein the attributes assigned to a periodic time slot indicate the output port or output ports of the distributor unit (121, 122) at which a time-controlled real-time message in the distributor unit (121, 122) arriving in the periodic time slot in the distributor unit (121, 122) is to be forwarded, and,
wherein a message arriving in a periodic time slot in the distributor unit (121, 122) is forwarded, after the beginning of the arrival of the message in the distributor unit (121, 122), in particular immediately after the beginning of the arrival, and specifically immediately after the arrival of the start of a header of the arriving message, to the output port or output ports of the distributor unit (121, 122) specified in the attributes assigned to the periodic time slot.

8. The computer system according to claim 7, **characterized in that** there is a check, preferably by the distributor unit (121, 122) through which a message is passing, of whether the attributes contained in a header (110) of a message passing through the distributor unit (121, 122) match the attributes, preferably stored in the distributor unit (121, 122), assigned to that periodic time slot in which the message passing through has arrived in the distributor unit (121, 122).

9. The computer system according to claim 8, **characterized in that** if the attributes of the message passing through do not match the attributes assigned to the periodic time slot, the current message transport of the message is discontinued, preferably by the distributor unit (121, 122).

10. The computer system according to any of claims 7 through 9, **characterized in that** messages that do not arrive in a periodic time slot for time-controlled real-time messages in a distributor unit (121, 122) are checked, preferably by the distributor unit (121, 122), and, if at least one attribute, preferably all attributes, of this message indicate(s) that it is a time-controlled real-time message, this message is stored for forwarding of the time-controlled real-time message until the periodic time slot.

11. The computer system according to any of claims 7 through 10, **characterized in that** the at least one distributor unit (121, 122) does not occupy time slots, that are provided for a time-controlled real-time message, by any other message.

12. The computer system according to any of claims 7 through 11, **characterized in that** the at least one distributor unit (121, 122) handles the message transport for time-controlled real-time messages according to the TTEthernet protocol.

## Revendications

1. Procédé pour le transport périodique de données en temps réel dans un système informatique réparti, lequel système informatique comporte des machines de noeud (**100, 101, 102, 103**), en particulier une pluralité de machines de noeud (**100, 101, 102, 103**), et des unités de distributeur (**121, 122**), en particulier une pluralité d'unités de distributeur (**121, 122**), dans lequel les machines de noeud (**100, 101, 102, 103**) et les unités de distributeur (**121, 122**) ont accès à un temps global, et dans lequel des données en temps réel sont transportées au moyen de messages en temps réel à déclenchement par le temps, dans lequel des messages en temps réel à déclenchement par le temps sont transportés dans les unités de distributeur dans des créneaux temporels périodiques,
**caractérisé par le fait que**
des attributs de messages en temps réel à déclenchement par le temps sont affectés a priori aux créneaux temporels périodiques d'une unité de distributeur (**121, 122**), dans lesquels créneaux temporels périodiques ces messages en temps réel à déclenchement par le temps doivent être transportés par l'unité de distributeur (**121, 122**), et de préférence mémorisés dans l'unité de distributeur (**121, 122**), et dans lequel les attributs affectés au créneau temporel périodique indiquent le port de sortie ou les ports de sortie de l'unité de distributeur (**121, 122**) auquel ou auxquels un message en temps réel à déclenchement par le temps arrivant dans le créneau temporel périodique dans l'unité de distributeur (**121, 122**) doit être transféré dans l'unité de distributeur (**121, 122**), et
dans lequel après le début de l'arrivée du message dans l'unité de distributeur (**121, 122**), en particulier immédiatement après le début de l'arrivée, et, à savoir, immédiatement après l'arrivée du début d'un en-tête du message arrivant, un message arrivant dans un créneau temporel périodique dans l'unité de distributeur (**121, 122**) est transféré au port de sortie ou aux ports de sortie de l'unité de distributeur (**121, 122**) qui est/sont spécifiés dans les attributs affectés au créneau temporel périodique.

2. Procédé selon la revendication 1, **caractérisé par le fait qu'**une vérification est effectuée - de préférence par l'unité de distributeur (**121, 122**) à travers laquelle un message passe, afin de déterminer si les attributs contenus dans un en-tête (**100, 110**) d'un message passant à travers l'unité de distributeur (**121, 122**) correspondent aux attributs qui sont affectés au créneau temporel périodique dans lequel le message traversant est arrivé dans l'unité de distributeur (**121, 122**) et qui sont de préférence mémorisés dans l'unité de distributeur (**121, 122**).

3. Procédé selon la revendication 2, **caractérisé par le fait que,** dans le cas dans lequel les attributs du message traversant ne correspondent pas aux attributs affectés au créneau temporel périodique, le transport de message courant du message est interrompu, de préférence par l'unité de distributeur (**121, 122**).

4. Procédé selon l'une des revendications 1 à 3, **caractérisé par le fait que** des messages qui n'arrivent pas dans un créneau temporel périodique pour des messages en temps réel à déclenchement par le temps dans l'unité de distributeur (**121, 122**) sont vérifiés, - de préférence par l'unité de distributeur (**121, 122**) - et, dans le cas dans lequel au moins un attribut, de préférence tous les attributs, de ce message indique/indiquent que le message est un message en temps réel à déclenchement par le temps, ce message est mis en tampon jusqu'au créneau temporel périodique pour le transfert du message en temps réel à déclenchement par le temps.

5. Procédé selon l'une des revendications 1 à 4, **caractérisé par le fait que** ladite au moins une unité de distributeur (**121, 122**) n'occupe pas de créneaux temporels qui sont prévus pour un message en temps réel à déclenchement par le temps avec un quelconque autre message.

6. Procédé selon l'une des revendications 1 à 5, **caractérisé par le fait que** ladite au moins une unité de distributeur (**121, 122**) effectue le transport de message pour des messages en temps réel à déclenchement par le temps selon le protocole TT Ethernet.

7. Système informatique, en particulier un système informatique en temps réel réparti, pour le transport périodique de données en temps réel, dans lequel le système informatique comporte des machines de noeud (**100, 101, 102, 103**), en particulier une pluralité de machines de noeuds (**100**, **101, 102, 103**), et des unités de distributeur (**121, 122**), en particulier une pluralité d'unités de distributeur (**121, 122**), dans lequel les machines de noeud (**100, 101, 102, 103**) et les unités de distributeur (**121, 122**) ont accès à un temps global, et dans lequel des données en temps réel sont transportées au moyen de messages en temps réel à déclenchement par le temps, dans lequel des messages en temps réel à déclenchement par le temps sont transportés dans les unités de distributeur (**121, 122**) dans des créneaux temporels périodiques,
**caractérisé par le fait que**
des attributs de messages en temps réel à déclenchement par le temps sont affectés a priori aux créneaux temporels périodiques d'une unité de distributeur (**121, 122**), dans lesquels créneaux temporels périodiques ces messages en temps réel à déclenchement par le temps doivent être transportés par l'unité de distributeur (**121, 122**), et de préférence mémorisés dans l'unité de distributeur (**121, 122**), et dans lequel les attributs affectés à un créneau temporel périodique indiquent le port de sortie ou les ports de sortie de l'unité de distributeur (**121, 122**), auquel ou auxquels un message en temps réel à déclenchement par le temps arrivant dans le créneau temporel périodique dans l'unité de distributeur (**121, 122**) doit être transféré dans l'unité de distributeur (**121**, **122**), et
dans lequel après le début de l'arrivée du message dans l'unité de distributeur (**121, 122**), en particulier immédiatement après le début de l'arrivée, et, à savoir, immédiatement après l'arrivée du début d'un en-tête du message arrivant, un message arrivant dans un créneau temporel périodique dans l'unité de distributeur (**121, 122**) est transféré au port de sortie ou aux ports de sortie de l'unité de distributeur (**121, 122**), qui est/sont spécifiés dans les attributs affectés au créneau temporel périodique.

8. Système informatique selon la revendication 7, **caractérisé par le fait qu'**une vérification est effectuée - de préférence par l'unité de distributeur (**121, 122**) à travers laquelle un message passe - afin de déterminer si les attributs contenus dans un en-tête (110) d'un message passant à travers l'unité de distributeur (**121, 122**) correspondent aux attributs qui sont affectés au créneau temporel périodique dans lequel le message traversant est arrivé dans l'unité de distributeur (**121, 122**) et qui sont de préférence mémorisés dans l'unité de distributeur (**121, 122**).

9. Système informatique selon la revendication 8, **caractérisé par le fait que,** dans le cas dans lequel les attributs du message traversant ne correspondent pas aux attributs affectés au créneau temporel périodique, le transport de message courant du message est interrompu, de préférence par l'unité de distributeur (**121, 122**).

10. Système informatique selon l'une des revendications 7 à 9, **caractérisé par le fait que** les messages qui n'arrivent pas dans un créneau temporel périodique pour des messages en temps réel à déclenchement par le temps dans une unité de distributeur (**121, 122**) sont vérifiés - de préférence par l'unité de distributeur (**121**, **122**) - et, dans le cas dans lequel au moins un attribut, de préférence tous les attributs, de ce message indique/indiquent que le message est un message en temps réel à déclenchement par le temps, ce message est mis en tampon jusqu'au créneau temporel périodique pour le transfert du message en temps réel à déclenchement par le temps.

11. Système informatique selon l'une des revendications 7 à 10, **caractérisé par le fait que** ladite au moins une unité de distributeur (**121, 122**) n'occupe pas de créneaux temporels qui sont prévus pour un message en temps réel à déclenchement par le temps avec un quelconque autre message.

12. Système informatique selon l'une des revendications 7 à 11, **caractérisé par le fait que** ladite au moins une unité de distributeur (**121, 122**) effectue le transport de message pour des messages en temps réel à déclenchement par le temps selon le protocole TTEthernet.
